# EUROPEAN PATENT SPECIFICATION

(11) **EP 2 196 715 B1**
(45) Date of publication and mention of the grant of the patent: **21.03.2012**
(21) Application number: 09388018.5
(22) Date of filing: 02.12.2009
(51) Int. Cl.: F16L 19/065

(54) **A compression fitting**
Rohrverschraubung
Raccord vissé

(30) Priority: 12.12.2008 DK 200800240 U
(43) Date of publication of application: 16.06.2010
(73) Proprietor: Hove A/S, 2610 Rodovre (DK)
(72) Inventor: Hove, Thomas, 2610 Rodovre (DK)
(74) Representative: Larsen, Hans Ole

(56) References cited:
- DE-C- 956 187
- DE-U1- 8 814 806
- FR-A- 1 095 933
- GB-A- 605 078
- GB-A- 1 335 515
- US-A- 4 886 304
- US-A1- 2006 138 772

## Description

### The prior art

The invention relates to a compression fitting comprising a union nut and a cone ring adapted to be received in and screwed on to the fitting part around a pipe, wherein the reception member of the fitting part is provided with an internally extending cone, and wherein the cone ring is provided with an externally extending cone, said two cones having the same cone angle such that when the union nut is tightened on the fitting part, the cone ring will form a liquid-tight engagement with the reception part and the exterior of the pipe, and wherein the end member of the cone ring forms an engagement face with the inner bottom face of the union nut, and wherein the end portion of the cone ring forms a cone angle with the inner side of the union nut, said angle being smaller than the other cone angle of the cone ring.

Fittings of this type are used for the joining of particularly stainless steel pipes.

Stainless pipelines, pipes are used for many purposes, since this material does not corrode or is not attacked by aggressive media. Such occur e.g. in the chemical industry.

In the food industry, too, stainless pipelines are used, since these are capable of meeting the hygienic requirements made with respect to such installations and are moreover capable of tolerating the use of the aggressively disinfecting agents which are used in the cleaning.

Further, the material has good strength properties which allow the use of high media pressures.

For these purposes, it is not possible to use the known cutting fittings, which are known to be used e.g. for the joining of copper pipes, the reason being that cutting cannot be carried out in a hard steel pipe.

The description of GB 1,335,515 discloses an example of such a cutting fitting. Cuttings and thereby the tightness are achieved in that the cone ring is configured conically with a cone angle of about 32 - 34 degrees at the side facing toward the union nut. The other cone angle, which engages the remaining part of the cone, has a smaller angle of about 16 - 18 degrees. This results in the cutting of the front part of the cone ring down into the pipe.

This joint, however, is not tight at high pressures, particularly because the cone ring is rigid without any possibility of adaptation to the exterior of the pipe. At high pressures, the medium will tend to leak out along the outer side of the pipe because of the absent possibility of adaptation.

### The object of the invention

It is the object of the invention to provide a compression fitting which is suitable for use in connection with hard pipes, and is also capable of keeping tight at high media pressures.

This is achieved according to the invention by providing the cone ring with slits extending from the pointed end and inwardly to ensure resilience and thereby tight engagement with the cone of the reception member and the exterior of the pipe.

In this simple manner, an absolutely tight connection between the pipe and the fitting part is achieved entirely without the use of the so-called cutting rings, but solely by means of accurately manufactured parts, where the slitted cone adapts itself accurately to the outer surface of the pipe.

According to the invention the reception member is provided with an O-ring disposed close behind the abutment for the pipe end, so that the pipe will be guided precisely to engagement.

When these conditions are met, a completely tight joint may be achieved without significant deformation of the individual parts, and this joint keeps tight at pressures which may exceed 200 bars.

Finally, as stated in claim 2, it is expedient to use the compression fitting at high pressures and/or large diameters, it being possible to ensure tightness without any deformation of the exterior of the pipe taking place.

### The drawing

An example of an embodiment of a fitting according to the invention will be described more fully below with reference to the drawing, in which
- fig. 1: shows a sectional view of an assembled fitting around a pipe,
- fig.1A: shows an enlarged sectional view of a portion of one corner of the union nut,
- fig. 2: shows a sectional view of the parts before the tightening-to- gether,
- fig. 3: shows the cone ring seen from the pointed end, and
- fig. 4: shows a sectional view of the ring seen the direction IV-IV in fig. 3.

### Description of the exemplary embodiment

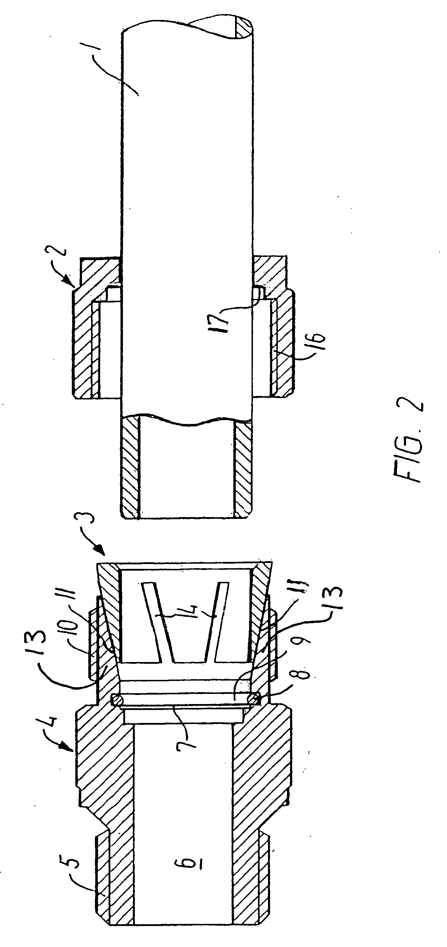

With reference to fig. 2, the individual parts of a compression fitting according to the invention will be described.

To the left in the drawing, the fitting part 4 is shown in a sectional view, in the form of an assembly member having a through bore 6 and having a reception member 13 to the right in the drawing.

External threads 5 for the threaded mounting or other mounting of the fitting are shown at the outer, left end.

Outer threads 10 on to which the union unit 2 may be screwed, are shown externally on the reception member, since this nut has cooperating, internal threads 16.

Inside the part 4, there is an abutment 7 with which the pipe end 1 may be engaged at the mounting. In front of this abutment 7, there is a groove or channel 9 into which an O-ring 8 may be inserted, said ring just allowing the pipe 1 to slide through, thereby guiding it.

Furthermore, an internal cone face 11 extends in the reception member 13, into which a cone ring 3 may be inserted.

Internally, this cone ring 3 is provided with a bore which accurately fits the exterior of the pipe, so that the pipe may be inserted through the cone ring. Some slits 14 are shown in the cone ring 3, providing a certain resilience of this part of the cone and thereby a safe engagement with the inner cone face 11 and with the exterior of the pipe 1, respectively.

Where the fitting is to be used for the joining of pipes having large diameters and/or at an extremely high operational pressure, the necessary flexibility of the cone ring may be ensured by providing additional slits.

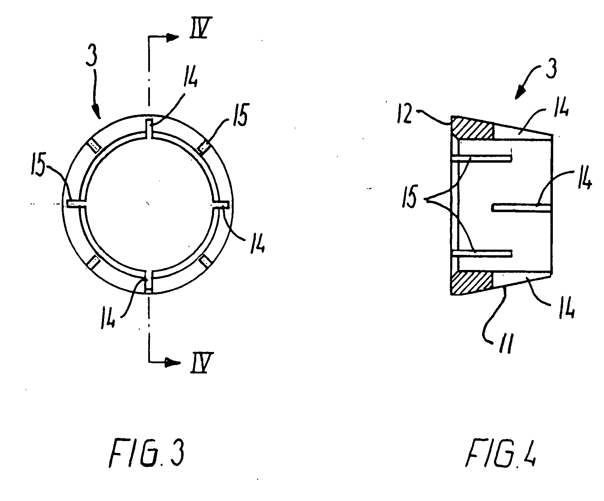

Figs. 3 and 4 show an example of a cone ring 3 having slits 14 which extend from the pointed ends of the rings, and additional slits 15 which extend from the opposite end 12 of the rings.

As will appear from the figures, the slits extend evenly over the entire cone ring to ensure uniform adaption after the tightening around the pipe 1.

Those parts are everything that is incorporated in the cone fitting according to the invention.

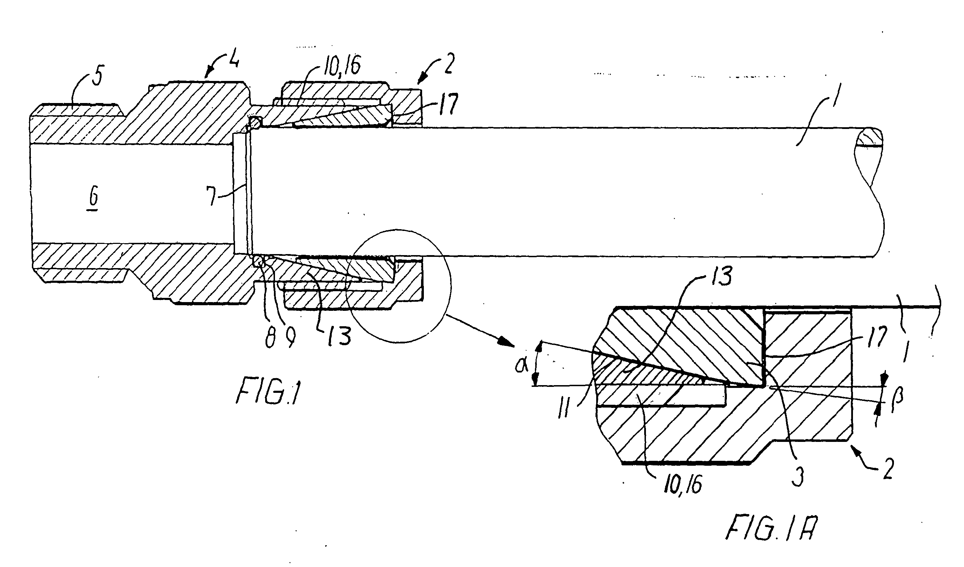

The fitting screwed together is shown in figs. 1 and 1A.

It is noted in particular that the pipe engages the abutment 7 of the reception part 4, and since the pipe is guided by the O-ring 8, it will extend centrally in the reception member for completely tight engagement with it.

The union nut 2 is screwed firmly and the cone ring 3 is thereby clamped around the pipe 1, which is thereby secured safely in the fitting.

With reference to fig. 1A, it is noted in particular that the end of the cone ring 3 forms an abutment 17 for the internal end face of the nut 2.

It is moreover noted that the outermost portion of the cone ring 3 is slightly conical (β) to form a ring-shaped engagement with the nut 2, so that the cone ring 3 is disposed precisely centered and thereby completely tightly against the nut.

In fig. 1A, the cone angle is indicated by the angle α which, in the example shown, is larger than the cone of the end which is indicated by β.

These tight abutments 7 and 17 are necessary for the achievement of a seal which is capable of tolerating media pressures of more than 200 bars.

Since no noticeable deformation takes place at the tightening, this fitting may be separated into its parts and be screwed together again, as needed.

Since, moreover, there are no gaskets either which become deformed, there is no risk that the fitting will become less tight at such use.

## Claims

1. A compression fitting (4) comprising a union nut (2) and a cone ring (3) adapted to be received in and screwed on to the fitting part (4) around a pipe (1); wherein the reception member (13) of the fitting part (4) is provided with an internally extending cone (11), and wherein the cone ring (3) is provided with an externally extending cone, said two cones having the same cone angle (α) such that when the union nut (2) is tightened on the fitting part (4) the cone ring (3) will form a liquid-tight engagement with the reception part (13) and the exterior of the pipe (1) and wherein the end member of the cone-ring (3) forms an engagement face (17) with the inner bottom face of the union nut (2) , and wherein the end portion of the cone ring (3) forms a cone angle (β) with the inner side of the union nut (2), said angle (β) being smaller than the other cone angle (α) of the cone ring (3), **characterized in that** the cone ring (3) is provided with slits (14) extending from the pointed end and inwardly to ensure resilience and thereby a tight engagement with the cone (11) of the reception member (13) and the exterior of the pipe (1), and at the cone end (11) the reception member (13) of the fitting part (4) is provided with an abutment (7) and an O-ring (8) extending in a reception groove (9) close to the abutment (7), so that, when being inserted to the abutment (7), the pipe end (1) is guided by the O-ring (8).

2. Use of the compression fitting defined in claim 1, **characterized in that** it is used at pressures of more than 200 bars.

## Patentansprüche

1. Konusverschraubung (4), die eine Überwurfmutter (2) und einen Konusring (3) umfasst, der so eingerichtet Ist, dass er um ein Rohr (1) herum in dem Verschraubteil (4) aufgenommen und darauf aufgeschraubt wird, wobei das Aufnahmeelement (13) des Verschraubteils (4) mit einem sich innen erstreckenden Konus (11) versehen ist und der Konusring (3) mit einem sich außen erstreckenden Konus versehen ist, die zwei Konusse den gleichen Konuswinkel (α) haben, so dass, wenn die Überwurfmutter (2) an dem Verschraubteil (4) angezogen wird, der Konusring (3) in flussigkeitsdichtem Eingriff mit dem Aufnahmeteil (13) und der Außenseite des Rohrs (1) ist, das Endelement des Konusrings (3) eine Eingriffsfläche (17) mit der inneren unteren Fläche der Überwurfmutter (2) bildet und der Endabschnitt des Konusrings (3) einen Konuswinkel (β) mit der Innenseite der Überwurfmutter (2) bildet, wobei der Winkel (β) kleiner ist als der andere Konuswinkel (α) des Konusrings (3), **dadurch gekennzeichnet, dass** der Konusring (3) mit Schlitzen (14) versehen ist, die sich von dem spitzen Ende aus nach innen erstrecken, um Elastizität und damit einen enganliegenden Eingriff mit dem Konus (11) des Aufnahmeelementes (13) und der Aufsenseite des Rohrs (1) zu gewährleisten, und an dem Konusende (11) das Aufnahmeelement (13) des Verschraubteils (4) mit einem Anschlag (7) und einem O-Ring (8) versehen ist, der sich in einer Aufnahmenut (9) nahe an dem Anschlag (7) erstreckt, so dass das Rohrende (1), wenn es zu dem Anschlag (7) eingeführt wird, durch den O-Ring (8) geführt wird.

2. Einsatz der Konusverschraubung nach Anspruch 1, **dadurch gekennzeichnet, dass** sie bei Drücken von mehrals 200 bar eingesetzt wird.

## Revendications

1. Raccord à compression (4) comprenant un écrou-union (2) et une bague conique (3) adaptée pour être reçue dans et vissée sur la partie de raccord (4) autour d'un tuyau (1) ; dans lequel l'organe de réception (13) de la partie de raccord (4) est doté d'un cône s'étendant vers l'intérieur (11), et dans lequel la bague conique (3) est dotée d'un cône s'étendant vers l'extérieur, lesdits deux cônes ayant le même angle de cône (α) de sorte que lorsque l'écrou-union (2) est serré sur la partie de raccord (4), la bague conique (3) forme une mise en prise étanche aux liquides avec la patrie de réception (13) et l'extérieur du tuyau (1), et dans lequel l'organe d'extrémité de la bague conique (3) forme une face de mise en prise (17) avec la face inférieure interne de l'écrou-union (2), et dans lequel la portion d'extrémité de la bague conique (3) forme un angle de cône (β) avec le côté interne de l'écrou-union (2), ledit angle (β) étant plus petit que l'autre angle de cône (α) de la bague conique (3), **caractérisé en ce que** la bague conique (3) est dotée de fentes (14) s'étendant de l'extrémité pointue et vers l'intérieur afin d'assurer la résilience et ainsi une mise en prise étanche avec le cône (11) de l'organe de réception (13) et l'extérieur du tuyau (1), et au niveau de l'extrémité du cône (11), l'organe de réception (13) de la partie de raccord (4) est doté d'une butée (7) et d'un joint torique (8) s'étendant dans une rainure de réception (9) à proximité de la butée (7), de sorte que, lorsqu'elle est insérée dans la butée (7), l'extrémité de tuyau (1) est guidée par le joint torique (8).

2. Utilisation du raccord de compression selon la revendication 1, **caractérisé en ce qu'**il est utilisés à des pressions de plus de 200 bars.
